# EUROPÄISCHE PATENTSCHRIFT

(11) **EP 3 139 455 B1**
(45) Veröffentlichungstag und Bekanntmachung des Hinweises auf die Patenterteilung: **21.08.2019**
(21) Anmeldenummer: 15183488.4
(22) Anmeldetag: 02.09.2015
(51) Int. Cl.: H01R 43/08, H01R 39/04, H01R 39/06, F02M 37/08

(54) **SCHEIBENROHLING ZUR HERSTELLUNG VON KOMMUTATORLAMELLEN**
DISC BLANK FOR THE PREPARATION OF COMMUTATOR LAMELLAE
ÉBAUCHE DE DISQUE POUR LA FABRICATION DE LAMELLES DE COLLECTEUR

(43) Veröffentlichungstag der Anmeldung: 08.03.2017
(73) Patentinhaber: Schunk Carbon Technology GmbH, 4822 Bad Goisern (AT)
(72) Erfinder: Maurer, Martin, 4802 Ebensee (AT); Huber, Florian, 4820 Bad Ischl (AT)
(74) Vertreter: advotec.

(56) Entgegenhaltungen:
- EP-A1- 1 001 501
- WO-A1-01/39336
- DE-A1- 19 925 286

## Beschreibung

Die vorliegende Erfindung betrifft einen Scheibenrohling zur Herstellung von Kommutatorlamellen eines Scheibenkommutators, umfassend einen aus einem Kohlenstoffmaterial gebildeten Kohlenstoffformkörper zur Ausbildung von Laufflächensegmenten der Kommutatorlamellen und eine auf dem Kohlenstoffformkörper angeordnete Kontaktanordnung aus einem Kohlenstoff und ein Kontaktmetall aufweisenden Kontaktmaterial zur Ausbildung von Anschlusssegmenten der Kommutatorlamellen.

Insbesondere zum Einsatz in Kraftstoffpumpen werden für die elektromotorischen Antriebe der Kraftstoffpumpen Scheibenkommutatoren eingesetzt, die aus Kommutatorlamellen zusammengesetzt sind, welche kupferfreie Laufflächensegmente aufweisen. Hiermit soll sichergestellt werden, dass im Betrieb der Kraftstoffpumpen infolge Abriebs der Kommutatorlamellen keine Kupferpartikel freigesetzt werden können, die ansonsten elektroerosive Vorgänge zwischen den Kohlebürsten und den Kommutatorlamellen der Kraftstoffpumpe auslösen könnten.

Üblicherweise werden die aus Kommutatorlamellen zusammengesetzten Scheibenkommutatoren basierend auf Scheibenrohlingen hergestellt, die kreisringförmig ausgebildet sind und in einem Formpressverfahren auf Basis einer homogenisierten Mischung von kohlenstoffbasierten Pulvern, wie etwa Graphit oder Koks, und organischen Bindemitteln, beispielsweise Harz oder Polymere, hergestellt werden. Vor der Vereinzelung der Kommutatorlamellen aus dem Scheibenrohling wird auf den Scheibenrohling eine Kontaktschicht aus einem metallischen Material, vorzugsweise Kupfer, aufgebracht, sodass die Kommutatorlamellen nach der Vereinzelung jeweils eine Schicht aus Kohlenstoffmaterial zur Ausbildung des Laufflächensegments und eine darauf angeordnete Schicht des metallischen Kontaktmaterials als Anschlusssegment aufweisen, das eine elektrische Kontaktierung der Laufflächensegmente mit der Wicklung des Elektromotors ermöglicht.

Bei den bekannten Scheibenkommutatoren bzw. den aus den Scheibenrohlingen gebildeten Kommutatorlamellen sind aufgrund des vorstehend beschriebenen Aufbaus der Scheibenrohlinge, bei dem sich das Kontaktmaterial zur Ausbildung der Anschlusssegmente als Kontaktschicht über die gesamte Oberfläche des Kohlenstoffformkörpers erstreckt, an den durch die Vereinzelung gebildeten Schnittkanten bedingt durch den Schneide- bzw. Sägevorgang freigesetzte Kupferpartikel angelagert, die im Betrieb der Kraftstoffpumpe zu einem erhöhten Verschleiß zwischen den Kohlebürsten und den Kommutatorlamellen sowie auch zu einer nachteiligen Beeinflussung von Inhaltsstoffen des Kraftstoffs führen können.

Weiterhin hat es sich gezeigt, dass es bei den bekannten Kommutatorlamellen, die entsprechend dem eingangs beschriebenen zweiphasigen Herstellungsverfahren hergestellt sind, bei denen also die Kontaktmaterialschicht nach Herstellung des Scheibenrohlings auf den Scheibenrohling aufgebracht wird, im Betrieb des Scheibenkommutators zu thermisch induzierten mechanischen Spannungen zwischen dem Laufflächensegment und der Kontaktschicht kommt, die zu Delaminationen zwischen dem Laufflächensegment und der Kontaktschicht und damit zu einem Versagen der Kraftstoffpumpe führen können.

Das Dokument WO 01/39336 A1 beschreibt einen Leiterrohling zur Herstellung eines Plankommutators nach dem Oberbegriff des Anspruchs 1.

Der vorliegenden Erfindung liegt die Aufgabe zugrunde, einen Scheibenrohling vorzuschlagen, der die Herstellung betriebssicherer Kommutatorlamellen ermöglicht.

Zur Lösung dieser Aufgabe weist der erfindungsgemäße Scheibenrohling die Merkmale des Anspruchs 1 auf.

Der erfindungsgemäße Scheibenrohling weist auf dem aus dem Kohlenstoffmaterial gebildeten Kohlenstoffformkörper eine Kontaktanordnung aus voneinander durch Übergangsbereiche beabstandeten Kontaktkörpern auf, die als Kontaktmaterial-Formkörper ausgebildet und in einem Formpressverfahren mit dem Kohlenstoffformkörper verbunden sind, derart, dass der Scheibenrohling als Mehrschichtkörper ausgebildet ist, wobei der Kohlenstoffformkörper eine kontinuierliche erste Schicht und die Kontaktanordnung eine durch die Übergangsbereiche unterbrochene zweite Schicht ausbildet, derart, dass die Übergangsbereiche kein Kontaktmaterial aufweisen.

Der Kontaktkörper wird als Mehrschichtkörper aus zumindest zwei Kontaktschichten, umfassend eine innere Kontaktschicht zur Ausbildung einer Kontaktkörperbasis und eine auf der inneren Kontaktschicht angeordnete äußere Kontaktschicht zur Ausbildung eines Kontaktkörperoberteils ausgebildet, so kann sowohl eine weitergehende Differenzierung des thermischen Ausdehnungskoeffizienten im Kontaktkörper selbst als auch eine vorteilhaft im Kontaktkörperoberteil maximierte elektrische Leitfähigkeit für eine besonders sichere Kontaktierung zwischen den Kommutatorlamellen und einer Wicklung des Elektromotors erfolgen.

Der erfindungsgemäß ausgebildete Scheibenrohling ermöglicht einerseits aufgrund seiner Ausbildung als in einem Formpressverfahren hergestellter Mehrschichtkörper die Ausbildung eines Verbunds zwischen der Kontaktanordnung und dem Kohlenstoffformkörper gleichzeitig mit der Herstellung des Kohlenstoffformkörpers und der Kontaktanordnung. Zum anderen ist aufgrund der Ausgestaltung der Kontaktanordnung aus voneinander beabstandeten Kontaktkörpern eine dem Formpressverfahren nachfolgende Vereinzelung von Kommutatorlamellen aus dem Scheibenrohling durch einen Trennschnitt in einem zwischen den Kontaktkörpern ausgebildeten kontaktmaterialfreien Bereich des Scheibenrohlings möglich, sodass durch den Trennschnitt kein im Kontaktmaterial enthaltenes Kontaktmetall freigelegt und als freie Partikel an der Schnittkante vorliegen kann.

Vorzugsweise bilden die Übergangsbereiche zwischen den Kontaktkörpern Zwischenräume aus, oder die Übergangsbereiche weisen zwischen den Kontaktkörpern ein Trennmaterial auf.

Bei einer besonders bevorzugten Ausführungsform des Scheibenrohlings weist dieser zwischen dem Kohlenstoffformkörper und den Kontaktkörpern eine Übergangszone auf, die sowohl das Kohlenstoffmaterial des Kohlenstoffformkörpers als auch das Kontaktmaterial der Kontaktkörper aufweist, sodass ein besonders sicherer mechanischer Verbund zwischen dem Kohlenstoffformkörper und den Kontaktkörpern mit einem aufgrund der Materialdurchmischung in der Übergangszone kontinuierlich ausgebildeten Übergang von dem thermischen Ausdehnungskoeffizienten des Kohlenstoffmaterials zum hiervon abweichenden thermischen Ausdehnungskoeffizienten des Kontaktmaterials ermöglicht wird und so dem Entstehen von Spannungen, die zu Delaminationen führen können, besonders wirkungsvoll entgegengewirkt wird.

Vorzugsweise weist dabei das Kontaktmaterial des Kontaktkörperoberteils einen höheren Masseanteil eines Kontaktmetalls auf als das Kontaktmaterial der Kontaktkörperbasis.

Um eine besonders hohe Betriebssicherheit der aus dem Scheibenrohling gebildeten Kommutatorlamellen zu erreichen, ist es vorteilhaft, wenn das Kontaktmaterial der Kontaktkörperbasis einen höheren Masseanteil an Kohlenstoff aufweist als das Kontaktmaterial des Kontaktkörperoberteils.

Vorzugsweise weist das Kontaktmaterial als Kontaktmetall Kupfer oder eine Kupferlegierung oder Silber oder eine Silberlegierung auf. Insbesondere im Hinblick auf eine erhöhte Kontaktsicherheit zwischen den Kontaktkörperoberteilen der aus dem Scheibenrohling hergestellten Kommutatorlamellen und der Wicklung des Motors ist es vorteilhaft, wenn das Kontaktmaterial des Kontaktkörperoberteils und das Kontaktmaterial der Kontaktkörperbasis unterschiedliche Kontaktmetalle aufweisen.

Die erfindungsgemäße Kommutatorlamelle weist die Merkmale des Anspruchs 10 auf.

In einer bevorzugten Ausführungsform weist der Kontaktkörper in Laufrichtung des Scheibenkommutators eine kleinere Erstreckung auf als das Laufflächensegment, derart, dass quer zur Laufrichtung verlaufende Körperkanten der Kontaktkörper gegenüber Schnittkanten des Laufflächensegments zurückversetzt sind, und das Laufflächensegment einen den Kontaktkörper überragenden Laufflächenüberstand aufweist.

Der erfindungsgemäße Scheibenkommutator weist entsprechend Anspruch 12 eine auf einem Trägerkörper angeordnete Kreisringanordnung der Kommutatorlamellen auf.

Nachfolgend werden bevorzugte Ausführungsformen des Scheibenrohlings anhand der Zeichnungen näher erläutert.

Es zeigen:
- **Fig. 1**: einen Scheibenkommutator mit einer Mehrzahl von auf einem Trägerkörper angeordneten Kommutatorlamellen in isometrischer Darstellung;
- **Fig. 2**: einen Scheibenrohling zur Herstellung der in **Fig. 1** dargestellten Kommutatorlamellen in Unteransicht;
- **Fig. 3**: den in **Fig. 2** dargestellten Scheibenrohling in einer Querschnittsdarstellung;
- **Fig. 4**: eine aus dem in den **Fig. 2** und **3** dargestellten Scheibenrohling vereinzelte Kommutatorlamelle;
- **Fig. 5**: eine Ausführungsform des erfinderischen Scheibenrohlings in einer Unteransicht;
- **Fig. 6**: den in **Fig. 5** dargestellten Scheibenrohling in Querschnittsdarstellung;
- **Fig. 7**: eine aus dem in den **Fig. 5** und **6** dargestellten Scheibenrohling vereinzelte Kommutatorlamelle.

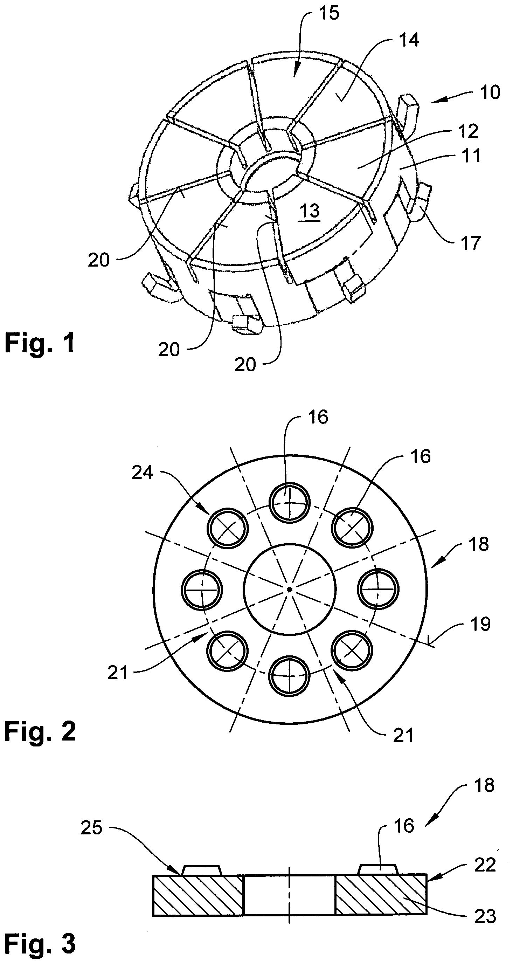

**Fig. 1** zeigt einen Scheibenkommutator 10 mit einem aus nicht leitendem Kunststoff ausgebildeten Trägerkörper 11, der im Falle des dargestellten Ausführungsbeispiels acht Kommutatorlamellen 12 aufweist, die jeweils so am Trägerkörper 11 angeordnet sind, dass Laufflächensegmente 13 der Kommutatorlamellen 12 mit ihren Kontaktflächen 14 in einer gemeinsamen Kontaktebene 15 des Scheibenkommutators 10 angeordnet sind und in dieser Kontaktebene 15 mit hier nicht dargestellten Kohlebürsten kontaktiert werden können.

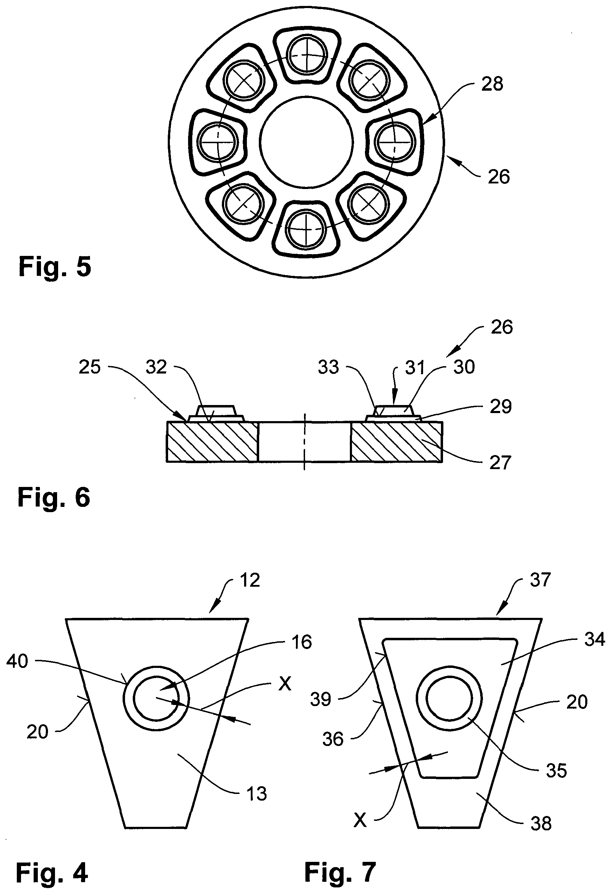

Wie aus **Fig. 4****,** die eine Kommutatorlamelle in Unteransicht zeigt, ersichtlich, weisen die Kommutatorlamellen 12 auf einer Unterseite des Laufflächensegments 13 jeweils einen Kontaktkörper 16 auf, der ein Anschlusssegment der Kommutatorlamelle 12 ausbildet und mit in **Fig. 1** dargestellten hakenförmig ausgebildeten Außenkontakten 17 kontaktiert ist, die zur Kontaktierung bzw. Aufnahme einer Wicklung eines Elektromotors dienen.

In den **Fig. 2** und **3** ist ein Scheibenrohling 18 dargestellt, der zur Herstellung der in **Fig. 1** und **4** dargestellten Kommutatorlamellen 12 durch Vereinzelung der Kommutatorlamellen 12 aus dem Scheibenrohling 18 dient. Wie in **Fig. 2** durch Trennlinien 19 angedeutet, werden zur Vereinzelung der Kommutatorlamellen 12 radiale Trennschnitte durch den Scheibenrohling 18 ausgeführt, sodass die in den **Fig. 1** und **4** dargestellten Schnittkanten 20 an den Kommutatorlamellen 12 ausgebildet werden.

Wie ferner aus **Fig. 2** ersichtlich, sind die Kontaktkörper 16 längs des Umfangs des Scheibenrohlings 18 voneinander beabstandet, sodass zwischen den Kontaktkörpern 16 hier Zwischenräume ausbildende Übergangsbereiche 21 ausgebildet sind, in denen die Dicke des Scheibenrohlings 18 (**Fig**. **3**) der Dicke des Querschnitts eines Kohlenstoffkörpers 22 entspricht, sodass bei einem Trennschnitt längs einer in den Übergangsbereich 21 fallenden Trennlinie 19 eine Schnittfläche 23 der Querschnittsfläche des Kohlenstoffkörpers 22 entspricht. Die Kontaktkörper 16 bleiben bei dem Trennschnitt unversehrt, sodass keine Partikel eines die Kontaktkörper 16 ausbildenden Kontaktmaterials freigesetzt werden können.

Der in **Fig. 3** im Schnitt dargestellte Scheibenrohling 18 ist als Mehrschichtkörper ausgebildet, wobei in der Darstellung gemäß **Fig. 3** der Kohlenstoffformkörper 22 die erste Schicht und eine aus den Kontaktkörpern 16 gebildete Kontaktanordnung 24 **(****Fig. 2****)** eine zweite Schicht ausbildet. Die Herstellung des Scheibenrohlings 18 erfolgt in einem Formpressvorgang, in dem der Kohlenstoffformkörper 22 und die auf dem Kohlenstoffformkörper 22 aus den Kontaktkörpern 16 zusammengesetzt ausgebildete Kontaktanordnung 24 gleichzeitig hergestellt werden. Dies kann beispielsweise so erfolgen, dass das zur Herstellung des Kohlenstoffformkörpers 22 verwendete Kohlenstoffmaterial, bestehend aus einer Mischung von Graphitpulver und einem organischen Bindemittel, in eine Form gegeben wird und anschließend eine Vorverdichtung des Kohlenstoffformkörpers 22 erfolgt. Nachfolgend wird das Kontaktmaterial zur Ausbildung der Kontaktkörper 16 durch eine Formmatrize definiert auf die Oberfläche des vorverdichteten Kohlenstoffformkörpers 22 aufgebracht. Das Kontaktmaterial weist neben einem Kontaktmetall, also beispielsweise Kupfer, einen Anteil an Graphit auf, sodass Graphit nicht nur in dem Kohlenstoffmaterial zur Ausbildung des Kohlenstoffformkörpers 22, sondern auch in dem Kontaktmaterial zur Ausbildung der Kontaktkörper 16 vorhanden ist.

Zur Herstellung der Kontaktkörper hat sich beispielsweise eine Kontaktmaterialzusammensetzung bewährt aus 60 % Kupferpulver, 30 % Graphit und 10 % organisches Bindemittel.

Zur Herstellung des Kohlenstoffformkörpers 22 hat sich eine Kohlenstoffmaterialzusammensetzung als vorteilhaft herausgestellt, die 80 % Kupferpulver, 15 % Graphit und 5 % organisches Bindemittel aufweist.

In den **Fig. 5** und **6** ist ein Scheibenrohling 26 dargestellt, der einen, wie insbesondere der **Fig. 6** zu entnehmen ist, dreischichtigen Aufbau mit einer ersten, als Kohlenstoffformkörper 27 ausgebildeten Schicht aufweist, die mit einer zweischichtig ausgebildeten Kontaktanordnung 28 versehen ist. Der Kohlenstoffformkörper 27 ist im Fall des vorliegenden Ausführungsbeispiels übereinstimmend ausgebildet mit dem Kohlenstoffformkörper 22 des Scheibenrohlings 18. Die Kontaktanordnung 28 weist eine unmittelbar an den Kohlenstoffformkörper 27 angrenzende Kontaktmaterialschicht 29 und eine darauf aufgebaute obere Kontaktmaterialschicht 30 auf, wobei die Kontaktmaterialschichten 29 und 30 zusammen jeweils Kontaktkörper 31 ausbilden.

Die Kontaktmaterialschichten 29 und 30 weisen eine unterschiedliche Kontaktmaterialzusammensetzung auf, wobei im vorliegenden Fall die Kontaktmaterialschicht 29 60 % Kupferpulver, 30 % Graphit und 10 % eines organishen Bindemittels aufweist. Die Kontaktmaterialschicht 30 weist eine Zusammensetzung aus 95 % Kupferpulver und 5 % Graphit auf, wobei hier aufgrund des hohen Kupferanteils auf die Zugabe eines Bindemittels verzichtet werden kann.

Übereinstimmend mit dem in den **Fig. 2** und **3** dargestellten Scheibenrohling 18 ist auch der in den **Fig. 5** und **6** dargestellte Scheibenrohling 26 in einem Formpressvorgang hergestellt, bei dem sich zwischen dem Kohlenstoffmaterial des Kohlenstoffformkörpers 27 und der angrenzenden Kontaktmaterialschicht 29 sowie ebenso zwischen der Kontaktmaterialschicht 29 und der Kontaktmaterialschicht 30 Übergangszonen 32 und 33 ausbilden, in denen eine Durchmischung der jeweils aneinander angrenzenden Schichtmaterialien erfolgt.

Wie insbesondere aus **Fig. 5** zu entnehmen, weisen die Kontaktmaterialschichten 29, 30 voneinander abweichende äußere Konturen auf, sodass die Kontaktkörper 31 abgestuft ausgebildet sind mit einer durch die Kontaktmaterialschicht 29 gebildeten Kontaktkörperbasis 34 und einem Kontaktkörperoberteil 35, der im vorliegenden Fall kegelstumpfförmig ausgebildet ist. Die kegelstumpfförmige Ausgestaltung des Kontaktkörperoberteils 35 ermöglicht eine formschlüssige Anpassung des Kontaktkörpers 31 an einen Außenkontakt 17 eines Scheibenkommutators.

Wie insbesondere **Fig. 7** zeigt, ermöglicht die in Draufsicht annähernd trapezförmige Ausgestaltung der Kontaktkörperbasis 34 trotz der Einhaltung eines Laufflächenüberstands x zwischen einer Körperkante 39 des Kontaktkörpers 31 und einer Schnittkante 36 der Kommutatorlamelle 37, mit dem das Laufflächensegment 38 die Kontaktkörperbasis 34 überragt, eine möglichst großflächige Überdeckung zwischen den Laufflächensegmenten 38 und dem durch den Kontaktkörper 31 ausgebildeten Anschlusssegment. **Fig. 4** zeigt entsprechend einen Laufflächenüberstand x zwischen einer Körperkante 40 des Kontaktkörpers 16 und der Schnittkante 20 der Kommutatorlamelle 12.

## Patentansprüche

1. Scheibenrohling (26) zur Herstellung von Kommutatorlamellen (37) eines Scheibenkommutators (10),
umfassend einen aus einem Kohlenstoffmaterial gebildeten Kohlenstoffformkörper (27) zur Ausbildung von Laufflächensegmenten (38) der Kommutatorlamellen und eine auf dem Kohlenstoffformkörper (27) angeordnete Kontaktanordnung (28) aus einem Kohlenstoff und ein Kontaktmetall aufweisenden Kontaktmaterial zur Ausbildung von Anschlusssegmenten der Kommutatorlamellen,
wobei die Kontaktanordnung voneinander durch Übergangsbereiche (21) beabstandete Kontaktkörper (31) aufweist,
wobei der Kohlenstoffformkörper (27) eine kontinuierliche erste Schicht und die Kontaktanordnung eine durch die Übergangsbereiche unterbrochene zweite Schicht ausbildet, derart, dass die Übergangsbereiche kein Kontaktmaterial aufweisen,
**dadurch gekennzeichnet,**
**dass** die Kontaktkörper (31) als Kontaktmaterial-Formkörper ausgebildet und in einem Formpressverfahren mit dem Kohlenstoffformkörper (27) verbunden sind, derart, dass der Scheibenrohling (26) als Mehrschichtkörper ausgebildet ist, und
**dass** die Kontaktkörper (31) als Mehrschichtkörper aus zumindest zwei Kontaktschichten, umfassend eine innere Kontaktschicht (29) zur Ausbildung einer Kontaktkörperbasis (34) und eine auf der inneren Kontaktschicht angeordnete äußere Kontaktschicht (30) zur Ausbildung eines Kontaktkörperoberteils (35), ausgebildet sind.

2. Scheibenrohling nach Anspruch 1,
**dadurch gekennzeichnet,**
**dass** die Übergangsbereiche (21) zwischen den Kontaktkörpern (16, 31) Zwischenräume ausbilden.

3. Scheibenrohling nach Anspruch 1,
**dadurch gekennzeichnet,**
**dass** die Übergangsbereiche (21) zwischen den Kontaktkörpern (16, 31) ein Trennmaterial aufweisen.

4. Scheibenrohling nach einem der vorangehenden Ansprüche,
**dadurch gekennzeichnet,**
**dass** der Kohlenstoffformkörper (22, 27) und die auf dem Kohlenstoffformkörper angeordneten Kontaktkörper (16, 31) in einem Formpressvorgang gleichzeitig hergestellt sind, derart, dass zwischen dem Kohlenstoffformkörper und den Kontaktkörpern eine Übergangszone (25) ausgebildet ist, die sowohl das Kohlenstoffmaterial der Kohlenstoffformkörper als auch das Kontaktmaterial der Kontaktkörper aufweist.

5. Scheibenrohling nach Anspruch 1,
**dadurch gekennzeichnet,**
**dass** das Kontaktmaterial des Kontaktkörperoberteils (35) einen höheren Masseanteil eines Kontaktmetalls als das Kontaktmaterial der Kontaktkörperbasis (34) aufweist.

6. Scheibenrohling nach Anspruch 1 oder 5,
**dadurch gekennzeichnet,**
**dass** das Kontaktmaterial der Kontaktkörperbasis (34) einen höheren Masseanteil an Kohlenstoff aufweist als das Kontaktmaterial des Kontaktkörperoberteils (35).

7. Scheibenrohling nach einem der vorangehenden Ansprüche,
**dadurch gekennzeichnet,**
**dass** das Kontaktmaterial als Kontaktmetall Kupfer oder eine Kupferlegierung aufweist.

8. Scheibenrohling nach einem der vorangehenden Ansprüche,
**dadurch gekennzeichnet,**
**dass** das Kontaktmaterial als Kontaktmetall Silber oder eine Silberlegierung aufweist.

9. Scheibenrohling nach einem der Ansprüche 1 bis 8,
**dadurch gekennzeichnet,**
**dass** das Kontaktmaterial des Kontaktkörperoberteils und das Kontaktmaterial der Kontaktkörperbasis unterschiedliche Kontaktmetalle aufweisen.

10. Kommutatorlamelle zur Ausbildung eines Scheibenkommutators,
**dadurch gekennzeichnet,**
**dass** die Kommutatorlamelle durch Vereinzelung aus einem Scheibenrohling nach einem oder mehreren der Ansprüche 1 bis 9 hergestellt ist.

11. Kommutatorlamelle nach Anspruch 10,
**dadurch gekennzeichnet,**
**dass** der Kontaktkörper (16, 31) in Laufrichtung des Scheibenkommutators eine kleinere Erstreckung aufweist als das Laufflächensegment (13, 38), derart, dass quer zur Laufrichtung verlaufende Körperkanten (39, 40) der Kontaktkörper gegenüber Schnittkanten (20, 36) des Laufflächensegments (13, 38) zurückversetzt sind, und das Laufflächensegment (13, 38) einen den Kontaktkörper überragenden Laufflächenüberstand x aufweist.

12. Scheibenkommutator für eine Kraftstoffpumpe,
**dadurch gekennzeichnet,**
**dass** der Scheibenkommutator (10) eine auf einem Trägerkörper (11) angeordnete Kreisringanordnung von Kommutatorlamellen (12, 37) nach Anspruch 10 oder 11 aufweist.

## Claims

1. A disk blank (26) for producing commutator bars (37) of a disk commutator (10),
comprising a carbon mold body (27) made of carbon material for forming tread segments (38) of the commutator bars and comprising a contact arrangement (28) made of a carbon and arranged on the carbon mold body (27) and comprising a contact material having contact metal for forming connecting segments of the commutator bars, the contact arrangement comprising contact bodies (31) spaced apart from each other via transition areas (21),
said carbon mold body (27) forming a continuous first layer and said contact arrangement forming a second layer disrupted by the transition areas in such a manner that the transition areas do not comprise any contact material,
**characterized in that**
said contact bodies (31) are realized as contact-material mold bodies and are connected to the carbon mold body (27) by compression molding in such a manner that the disk blank (26) is realized as a multi-layered body, and
the contact bodies (31) are formed as multi-layered bodies made of at least two contact layers, comprising an inner contact layer (29) for forming a contact body base (34) and an outer contact layer (30) arranged on the inner contact layer for forming a contact-body upper part (35).

2. The disk blank according to claim 1,
**characterized in that**
the transition areas (21) form gaps between the contact bodies (16, 31).

3. The disk blank according to claim 1,
**characterized in that**
the transition areas (21) comprise a separating material between the contact bodies (16, 31).

4. The disk blank according to any one of the preceding claims,
**characterized in that**
the carbon mold body (22, 27) and the contact bodies (16, 31) arranged on the carbon mold body are produced simultaneously in one compression molding process in such a manner that a transition zone (25) that has both the carbon material of the carbon mold bodies and the contact material of the contact bodies is formed between the carbon mold body and the contact bodies.

5. The disk blank according to claim 1,
**characterized in that**
the contact material of the contact-body upper part (35) comprises a higher percentage of weight of a contact metal than the contact material of the contact body base (34).

6. The disk blank according to claim 1 or 5,
**characterized in that**
the contact material of the contact body base (34) comprises a higher percentage by weight of carbon than the contact material of the contact-body upper part (35).

7. The disk blank according to any one of the preceding claims,
**characterized in that**
the contact material comprises copper or a copper alloy as a contact metal.

8. The disk blank according to any one of the preceding claims,
**characterized in that**
the contact material comprises silver or a silver alloy as a contact metal.

9. The disk blank according to any one of claims 1 to 8,
**characterized in that**
the contact material of the contact-body upper part and the contact material of the contact body base comprise different contact metals.

10. A commutator bar for forming a disk commutator,
**characterized in that**
the commutator bar is produced via separation from a disk blank according to any one of claims 1 to 9.

11. The commutator bar according to claim 10,
**characterized in that**
the contact body (16, 31) has a smaller extension in the tread direction of the disk commutator than the tread segment (13, 38) in such a manner that body edges (39, 40) of the contact bodies extending transversely to the tread direction are recessed from cutting edges (20, 36) of the tread segment (13, 38), and **in that** the tread segment (13, 38) comprises a tread protrusion x protruding over the contact body.

12. A disk commutator for a fuel pump,
**characterized in that**
the disk commutator (10) comprises an annular arrangement of commutator bars (12, 37) according to claim 10 or 11, said annular arrangement being arranged on a carrier body (11).

## Revendications

1. Ébauche de disque (26) pour la fabrication de lames de collecteur (37) d'un collecteur à disque (10),
comprenant un corps moulé en carbone (27) réalisé en un matériau à base de carbone pour la formation de segments de surface de friction (38) des lames de collecteur et un ensemble de contacts (28) en carbone qui est disposé sur le corps moulé en carbone (27) et qui comprend un matériau de contact ayant du métal de contact pour former des segments de raccordement des lames de collecteur,
l'ensemble de contacts ayant des corps de contact (31) espacés l'uns de l'autres par des zones de transition (21),
le corps moulé en carbone (27) formant une première couche continue et l'ensemble de contacts formant une deuxième couche qui est interrompue par les zones de transition de telle manière que les zones de transition n'ont aucun matériau de contact,
**caractérisée en ce que**
les corps de contact (31) sont réalisés comme corps moulés en matériau de contact et sont reliés avec le corps moulé en carbone (27) par moulage par compression de telle manière que l'ébauche de disque (26) est réalisée comme corps multicouche et
les corps de contact (31) sont réalisés comme corps multicouches constitués d'au moins deux couches de contact comprenant une couche de contact (29) intérieure destinée à former une base de corps de contact (34) et une couche de contact (30) extérieure disposée sur la couche de contact intérieure et destinée à former une partie supérieure (35) du corps de contact.

2. Ébauche de disque selon la revendication 1,
**caractérisée en ce que**
les zones de transition (21) forment des interstices entre les corps de contact (16, 31).

3. Ébauche de disque selon la revendication 1,
**caractérisée en ce que**
les zones de transition (21) ont un matériau de séparation entre les corps de contact (16, 31).

4. Ébauche de disque selon l'une quelconque des revendications précédentes,
**caractérisée en ce que**
le corps moulé en carbone (22, 27) et les corps de contact (16, 31) disposés sur le corps moulé en carbone sont fabriqués simultanément dans un processus de moulage par compression de telle manière qu'une zone de transition (25) ayant le matériau à base de carbone des corps moulés en carbone et le matériau de contact des corps de contact est formée entre le corps moulé en carbone et les corps de contact.

5. Ébauche de disque selon la revendication 1,
**caractérisée en ce que**
le matériau de contact de la partie supérieure (35) du corps de contact a un pourcentage en masse d'un métal de contact supérieur à celui du matériau de contact de la base de corps de contact (34).

6. Ébauche de disque selon la revendication 1 ou 5,
**caractérisée en ce que**
le matériau de contact de la base de corps de contact (34) a un pourcentage en masse de carbone supérieur à celui du matériau de contact de la partie supérieure (35) du corps de contact.

7. Ébauche de disque selon l'une quelconque des revendications précédentes,
**caractérisée en ce que**
le matériau de contact comporte du cuivre ou un alliage de cuivre comme métal de contact.

8. Ébauche de disque selon l'une quelconque des revendications précédentes,
**caractérisée en ce que**
le matériau de contact comporte de l'argent ou un alliage d'argent comme métal de contact.

9. Ébauche de disque selon l'une quelconque des revendications 1 à 8,
**caractérisée en ce que**
le matériau de contact de la partie supérieure du corps de contact et le matériau de contact de la base de corps de contact comportent des métaux de contact différents.

10. Lame de collecteur pour former un collecteur à disque,
**caractérisée en ce que**
la lame de collecteur est fabriquée par séparation d'une ébauche de disque selon l'une quelconque des revendications 1 à 9.

11. Lame de collecteur selon la revendication 10,
**caractérisée en ce que**
le corps de contact (16, 31) est plus étroit que le segment de surface de friction (13, 38) dans le sens de marche du collecteur à disque de sorte que des bords (39, 40) des corps de contact s'étendant perpendiculaire au sens de marche sont en retrait par rapport à des bords de coupe (20, 36) du segment de surface de friction (13, 38) et **en ce que** le segment de surface de friction (13, 38) a une saillie de surface de friction x qui dépasse le corps de contact.

12. Collecteur à disque pour une pompe à carburant,
**caractérisé en ce que**
le collecteur à disque (10) comprend un ensemble de lames de collecteur (12, 37) selon la revendication 10 or 11 en forme d'anneau circulaire qui est disposé sur un corps de support (11).
